# EUROPÄISCHE PATENTSCHRIFT

(11) **EP 2 608 929 B1**
(45) Veröffentlichungstag und Bekanntmachung des Hinweises auf die Patenterteilung: **03.06.2015**
(21) Anmeldenummer: 11760718.4
(22) Anmeldetag: 24.08.2011
(51) Int. Cl.: B24B 13/01, B32B 7/00, B32B 25/02

(54) **AUSWECHSELBARE FEINBEARBEITUNGSMEMBRAN, STATIONÄRES FEINBEARBEITUNGSWERKZEUG UND VERFAHREN ZUR HERSTELLUNG EINER AUSWECHSELBAREN FEINBEARBEITUNGSMEMBRAN**
REPLACEABLE FINE MACHINING MEMBRANE, STATIONARY FINE MACHINING TOOL, AND METHOD FOR PRODUCING A REPLACEABLE FINE MACHINING MEMBRANE
MEMBRANE D'USINAGE DE PRÉCISION REMPLAÇABLE, OUTIL D'USINAGE DE PRÉCISION FIXE ET PROCÉDÉ DE FABRICATION D'UNE MEMBRANE D'USINAGE DE PRÉCISION REMPLAÇABLE

(30) Priorität: 25.08.2010 DE 102010035526
(43) Veröffentlichungstag der Anmeldung: 03.07.2013
(73) Patentinhaber: Fraunhofer Gesellschaft zur Förderung der angewandten Forschung e.V., 80686 München (DE)
(72) Erfinder: TÜCKS, Roland, 52072 Aachen (DE)
(74) Vertreter: Naeven, Ralf
(86) Internationale Anmeldenummer: PCT/EP2011/064501
(87) Internationale Veröffentlichungsnummer: WO 2012/025547

(56) Entgegenhaltungen:
- DE-A1-102010 001 213
- DE-C1- 4 442 181
- US-A1- 2008 200 102

## Beschreibung

Die vorliegende Erfindung betrifft eine Feinbearbeitungsmembran gemäß dem Oberbegriff des Anspruchs 1, ein stationäres Feinbearbeitungswerkzeug, insbesondere für das präzise reproduzierbare Feinbearbeiten kompliziert geformter Metall-, Glas-, Kunststoff- oder Keramikoberflächen sowie ein Verfahren zur Herstellung einer auswechselbaren Feinbearbeitungsmembran.

Das Feinbearbeiten von Werkstückoberflächen, insbesondere von Metall-, Glas-, Kunststoff- oder Keramikoberflächen, umfasst das Schleifen, Polieren, Läppen, Spanen, Fräsen, Drehen oder andere Feinbearbeitungsprozesse und ist häufig ein präzise kraftgeregelter bzw. kraftgesteuerter Prozess, bei dem die Einhaltung eines flächig homogenen und zeitlich konstanten druckmechanischen Zustands in einer bestimmten Feinbearbeitungszone zwischen Feinbearbeitungsmittel und Werkstück von enormer Bedeutung ist, um reproduzierbare Abtragsverhältnisse gewährleisten zu können. Häufig finden zu diesem Zweck Feinbearbeitungswerkzeuge mit Membranwerkzeugkopf Anwendung. Der Membranwerkzeugkopf weist dabei eine Membran auf, deren Form sich dem Werkstück entsprechend anpassen kann. Auf der meist nach außen gewölbten Membran wird werkstückseitig ein Feinbearbeitungsmittelträger aufgespannt oder aufgeklebt, der ein Feinbearbeitungsmittel trägt. Durch Rotations-, Oszillations- und/oder Exzenterbewegungen des Werkzeugkopfs, der vom Feinbearbeitungswerkzeug präzise gesteuert mit einem definierten Anpressdruck auf die Werkstückoberfläche und definierter Geschwindigkeit entlang eines definierten Weges über die Werkstückoberfläche geführt wird, kann die Werkstückoberfläche mit präzise reproduzierbarer Genauigkeit feinbearbeitet werden. Da die Membran mit dem aufgebrachten Feinbearbeitungsmittelträger verformbar ist, kann sich die Feinbearbeitungsfläche in gewissem Rahmen der Formung der Werkstückoberfläche anpassen, sodass im Wesentlichen die Fläche der Feinbearbeitungszone konstant bleibt. Damit erlauben Feinbearbeitungswerkzeuge mit Membranwerkzeugkopf ein präzises Feinbearbeiten gewölbter bzw. frei geformter Werkstückformen.

Aus der DE 102 42 422 B1 sind ein Verfahren und eine Vorrichtung für die Feinbearbeitung einer optischen Fläche einer Linse bekannt, bei denen die optische Fläche mit einer anpassbar geformten Läppscheibe poliert wird. Die Läppscheibe weist dabei eine starre Grundfläche auf, auf welche werkstückseitig ein Polierpad mit Poliermittelträger angebracht wird. Zwischen dem Polierpad und der starren Grundfläche bildet eine wahlweise verflüssigbare oder verfestigbare Substanz eine Schicht, die sich entsprechend der zu polierenden Linsenkontur in flüssiger Form anpassen kann und für den Poliervorgang in gewünschter Form verfestigen lässt.

Die EP 0 779 128 B1 beschreibt ein Verfahren zur Herstellung ophthalmischer Linsen und insbesondere ein formanpassbares Werkzeug zum Feinschleifen/Polieren ophthalmischer Linsen. Dabei ist eine im Wesentlichen halbkugelförmige Blase, die sich in der Form an eine Oberfläche einer zu polierenden Linse anpassen kann, über einer ersten werkstückseitigen Kammer und einer zweiten werkzeugseitigen Kammer angebracht, die zusammen ein im Wesentlichen festes Volumen haben, wobei die erste Kammer einen Füllstoff wie Sand enthält und die zweite Kammer mittels Luftdruck vergrößert wird, um die erste Kammer zu verkleinern.

Ebenso betrifft die EP 0 804 999 B1 ein Werkzeug zum Feinschleifen oder Polieren ophthalmischer Linsen. Dabei ist zwischen zwei Diaphragmen ein Bündel Stäbe angeordnet, die in Längsrichtung eine Verformung des ersten Diaphragmas auf das zweite Diaphragma übertragen und sich dadurch das zweite Diaphragma einer zu polierenden Linsenform anpassen kann.

Die DE 101 06 007 B1 betrifft ein ähnliches wie das aus der EP 0 804 999 B1 bekannte Werkzeug, bei dem das Bündel Stäbe axial und radial durch Drucklufteinwirkung fixierbar ist.

Die EP 0 971 810 B1 beschreibt ebenfalls ein Werkzeug und Verfahren zum Polieren einer ophthalmischen Linse mit einer dynamisch verformbaren Läppscheibe, wobei unter der Läppscheibe wellenerzeugende Mittel angeordnet sind, welche die Läppscheibe in Wellenbewegungen versetzt, sodass mittels der Wellen Schleifschlamm zwischen die Läppscheibe und die Linse getragen wird.

Nachteilig an den vorbeschriebenen bekannten Feinbearbeitungswerkzeugen mit einem Membranwerkzeugkopf ist, dass die Membran als Auflagefläche für einen Feinbearbeitungsmittelträger dient und diese auf der Membran aufgespannt oder aufgeklebt werden muss. Bei hohen Drücken und starken Reibungskräften zwischen Werkstückoberfläche und Feinbearbeitungsmittel reißt der Feinbearbeitungsmittelträger häufig auf oder von der Membran ab. Zudem müssen die Feinbearbeitungsmittelträger aus flächiger Meterware ausgeschnitten, in Form gebracht und dann auf die Membran gespannt oder geklebt werden. Dadurch ist die Bandbreite an möglichen Oberflächenkonturen der Membran beschränkt, die mit einem Feinbearbeitungsmittelträger bestückt werden können. Vor allem stark gewölbte Membrankonturen können nicht mit einem Feinbearbeitungsmittelträger bespannt oder beklebt werden, da sich der flächige Feinbearbeitungsmittelträger den starken Wölbungen nicht ohne Faltenwurf anpassen kann. Im Übrigen ist das Ausschneiden und Anformen der Feinbearbeitungsmittelträger zeitaufwändig und somit kostenintensiv.

Aus der DE 44 42 181 C2 ist eine auswechselbare Feinbearbeitungsmembran bekannt, die z.B. für den Einsatz in einer Optik-Poliermaschine geeignet ist. Dabei kann die Membran selbst als Poliermittelträger dienen. Es ist allerdings nicht offenbart, aus welchem konkreten Material die Membran bestehen soll, wenn sie gleichzeitig als Poliermittelträger dient. Poliermittelträger sind ohne weitere Maßnahmen in der Regel zu porös, um eine Druckregelung zuzulassen und somit nicht als Membrane geeignet.

Es ist daher die Aufgabe der vorliegenden Erfindung, eine alternative auswechselbare Feinbearbeitungsmembran sowie ein Feinbearbeitungswerkzeug mit Membranwerkzeugkopf bereitzustellen, bei dem auch mit stark gewölbten Membranen Werkstückoberflächen präzise reproduzierbar feinbearbeitet werden können. Außerdem soll ein Ab- oder Aufreißen des Feinbearbeitungsmittelträgers vermieden und das Feinbearbeiten vereinfacht und beschleunigt werden.

Gelöst wird diese Aufgabe in Bezug auf die auswechselbare Feinbearbeitungsmembran durch die kennzeichnenden Merkmale des Anspruchs 1, bzw. durch ein stationäres Feinbearbeitungswerkzeug gemäß Anspruch 9 sowie durch ein Verfahren zur Herstellung einer solchen Feinbearbeitungsmembran gemäß Anspruch 13.

Gemäß einem ersten Aspekt der Erfindung wird eine auswechselbare Feinbearbeitungsmembran zum Befestigen an einem druckbeaufschlagbaren Werkzeugkopf eines Feinbearbeitungswerkzeugs für das Feinbearbeiten einer Werkstückoberfläche bereitgestellt, wobei ein Feinbearbeitungsmittelträger in der Feinbearbeitungsmembran integriert ist und wobei die Feinbearbeitungsmittelträger ein vernetztes Elastomer aufweist und der Feinbearbeitungsmittelträger in dem vernetzten Elastomer eingebettet ist.

"Feinbearbeitung" bzw. "Feinbearbeiten" kann jegliches mechanische Fertigungsverfahren nach DIN 8510 sein, bei dem ein Material in die gewünschte Form gebracht wird, indem überflüssiges Material abgetragen wird. Dies ist insbesondere das Schleifen, Polieren, Reiben, Läppen, Spanen, Schaben, Raspeln, Fräsen, Feilen, oder Drehen von Werkstückoberflächen, insbesondere von Metall-, Glas-, Kunststoff- oder Keramikoberflächen. Ein "Feinbearbeitungsmittelträger" ist hierbei ein Material, das ein Feinbearbeitungsmittel wie etwa Diamantstaub oder feinkörnigen Quarzsand tragen kann, das als Abrasivmittel dient. Der Feinbearbeitungsmittelträger kann bereits vor dem Befestigen der Feinbearbeitungsmembran ein Feinbearbeitungsmittel tragen oder das Feinbearbeitungsmittel kann vor oder während des Feinbearbeitungsprozesses auf den Feinbearbeitungsmittelträger aufgebracht werden.

Der Begriff "stationäres Feinbearbeitungswerkzeug" bedeutet hierin, dass das Feinbearbeitungswerkzeug eine definierte räumliche Position zum Werkstück hat und nicht etwa mit der Hand gehalten wird. Ein stationäres Feinbearbeitungswerkzeug kann allerdings sich relativ zum Werkstück bewegliche und/oder rotierbare Teile aufweisen. Das Werkstück kann auch relativ zum Feinbearbeitungswerkzeug beweglich und/oder rotierbar sein. Ein Beispiel für ein stationäres Feinbearbeitungswerkzeug ist eine ortsfeste Polierspindel mit rotierbarem Spindelarm.

Erfindungsgemäß stellt die Feinbearbeitungsmembran mit dem integrierten Feinbearbeitungsmittelträger eine einstückige Kompositware dar, die mit nahezu beliebig starker Wölbung hergestellt werden kann. Außerdem wird durch die Integration des Feinbearbeitungsmittelträgers ein Ab- oder Aufreißen verhindert.

Durch die Integration des Feinbearbeitungsträgers in der Feinbearbeitungsmembran kann die Feinbearbeitungsmembran als auswechselbare Einwegware verwendet werden. Im Gegensatz zu den im Stand der Technik bekannten Feinbearbeitungswerkzeugen, bei denen die Membran fest im Werkzeug integriert ist und nur der Feinbearbeitungsmittelträger abgenutzt und ausgetauscht wird, wird erfindungsgemäß die Feinbearbeitungsmembran mit integriertem Feinbearbeitungsmittelträger ausgetauscht. Dies vereinfacht und beschleunigt das Feinbearbeiten enorm, da kein flächiger Feinbearbeitungsmittelträger ausgeschnitten, angeformt und auf die Membran aufgeklebt werden muss.

Ein weiterer Vorteil der erfindungsgemäßen Feinbearbeitungsmembran ist, dass sie durch die Integration des Feinbearbeitungsmittelträgers dünner und somit flexibler ausgestaltet werden kann. Dadurch entspricht der Anpressdruck der Feinbearbeitungsmembran auf eine Werkstückoberfläche dem regelbaren Innendruck im Druckraum des Werkzeugkopfs. Damit ist also über den Innendruck der Anpressdruck genau regelbar. Bei den bekannten Feinbearbeitungsmembranen führt der aufgeklebte Feinbearbeitungsmittelträger zu einer erhöhten Steifigkeit und Dicke, sodass der Anpressdruck in undefiniertem Maße höher ist als der Innendruck. Der Anpressdruck ist daher mit den bekannten Feinbearbeitungsmembranen nicht exakt über den Innendruck im Druckraum des Werkzeugkopfs regelbar.

Vorzugsweise weist die Feinbearbeitungsmembran eine in dem vernetzten Elastomer eingebettete Gewebelage auf. Durch die Gewebelage wird die Feinbearbeitungsmembran wesentlich verstärkt und auch bei relativ geringer Dicke der Membran sichergestellt, dass auch bei hoher Druckbeaufschlagung des Werkzeugkopfs die Feinbearbeitungsmembran ihre Kontur beibehält. Durch die Einbettung des Feinbearbeitungsmittelträgers in das Elastomer können unterschiedlichste Feinbearbeitungsmittelträger wie etwa Filz, PU-Schaum, Kunstseide oder Nylonstoff in die Membran stoffschlüssig und abreißsicher integriert werden, ohne jeweils angepasste Verbindungsmittel einsetzen zu müssen.

Unter einem "Elastomer" wird hierin jeglicher bei Raumtemperatur formfeste, aber elastisch verformbare Kunststoff verstanden, der sich bei Zug- und/oder Druckbelastungen elastisch verformt, aber danach wieder selbständig in seine ursprüngliche, unverformte Gestalt zurückfindet. Unter bestimmten Bedingungen wie etwa einer Temperatur oberhalb der Raumtemperatur kann ein Elastomer allerdings fließfähig sein. Unter "Vernetzung" bzw. "Vernetzen" eines fließfähigen Elastomers wird hierin eine Verknüpfung von Molekülen eines fließfähigen Elastomers zu einem dreidimensionalen Netzwerk verstanden, sodass das Elastomer formfest, aber elastisch verformbar wird. Dies kann beispielsweise eine Vulkanisation sein, bei der ein Vernetzungsmittel wie etwa Schwefel und/oder Katalysatoren eingesetzt werden. Es kann aber auch eine sogenannte Selbstvernetzung allein durch bestimmte äußere Reaktionsbedingungen wie etwa Wärme- und/oder Druckeinwirkung erreicht werden.

Vorzugsweise ist die Gewebelage der Feinbearbeitungsmembran werkzeugseitig in dem vernetzten Elastomer eingebettet und der Feinbearbeitungsmittelträger werkstückseitig in dem vernetzten Elastomer eingebettet. Unter "werkstückseitig" wird hierin die Seite verstanden, die dazu vorgesehen ist, bei vorgesehener Verwendung einem zu bearbeitenden Werkstück zugewandt zu sein. Unter "werkzeugseitig" wird hierin die Seite verstanden, die dazu vorgesehen ist, bei vorgesehener Verwendung einem Feinbearbeitungswerkzeug zugewandt zu sein.

Es ist weiterhin bevorzugt, dass die Feinbearbeitungsmembran einen zentralen Feinbearbeitungsabschnitt aufweist, wobei die werkstückseitige Oberfläche des Feinbearbeitungsabschnitts konvex und die werkzeugseitige Oberfläche des Feinbearbeitungsabschnitts konkav geformt ist. Dadurch erhält die Membran im Wesentlichen die Form einer Schale, die sphärisch oder andersartig vom Werkzeug aus nach außen gewölbt geformt ist und innenseitig einen Druckraum begrenzen kann, der beispielsweise mit einem geregelten Fluiddruck druckbeaufschlagt werden kann. Der Druckraum kann dabei mit einem Fluid wie etwa Luft, Wasser oder Öl druckbeaufschlagt werden. Alternativ können auch ein Bündel Stäbe oder andere geeignete Mittel eine Vielzahl von werkzeugseitigen Druckpunkten auf die Feinbearbeitungsmembran ausüben. Außenseitig ist der Feinbearbeitungsmittelträger integriert, damit dieser zusammen mit einem darauf aufgebrachten Feinbearbeitungsmittel zur Feinbearbeitung eines Werkstücks mit dessen Oberfläche, die ggf. auch konkav gekrümmt sein kann, reibschlüssig in Kontakt gebracht werden kann.

Vorzugsweise weist die Feinbearbeitungsmembran einen ringförmig umlaufenden Befestigungsfalz auf, welcher zudem die Funktion eines Dichtungsrings hat. Damit wird das Befestigen der auswechselbaren Feinbearbeitungsmembran besonders einfach. Es bedarf also keines zusätzlichen Dichtungsrings. Die Feinbearbeitungsmembran kann luftdicht ausgestaltet sein oder in beschränktem Maße luftdurchlässig sein, wobei die Feinbearbeitungsmembran die Aufrechterhaltung eines konstanten innenseitigen Drucks erlauben muss, d.h. "druckdicht" sein muss.

Das Elastomer weist vorzugsweise mindestens einen Kautschuk aus der Gruppe auf, die besteht aus: Epichlorhydrin-Kautschuk (ECO), Ethylen-Propylen-Dien-Kautschuk (EPDM), Nitrilkautschuk (NBR), Butylkautschuk (IIR), Fluorkautschuk (FPM), Polyester/Ether-Polyurethan-Kautschuk (PUR), Ethylenvinylacetat-Kautschuk (EVA).

Diese Kautschuke sind geeignete Elastomergrundstoffe, um die notwendige Elastizität bzw. Steifigkeit und Reißfestigkeit einer auswechselbaren Feinbearbeitungsmembran erreichen zu können.

Die Gewebelage weist vorzugsweise mindestens einen Stoff aus der Gruppe auf, die besteht aus: Polyethersulfon (PES), Polyamid (PA). Diese Kunststoffe können in Form von Fasern den Grundstoff für eine flexible, aber reißfeste Gewebebahn bilden, aus der die Gewebelage ausgetrennt werden kann.

Um eine größere Dicke und/oder Festigkeit der Feinbearbeitungsmembran zu erhalten, kann die Feinbearbeitungsmembran zwei oder mehr Gewebelagen und/oder Elastomerschichten aufweisen. Dabei können die Gewebelagen in einer Elastomerschicht eingebettet sein, oder mehrere Elastomerschichten können mit jeweils einer oder mehr Gewebelagen miteinander vernetzt sein. Die Feinbearbeitungsmembran ist auch in dieser Ausführungsform eine einstückige Kompositware.

Die Feinbearbeitungsmembran kann auf ihrer dem Werkstück zugewandten Seite Strukturen aufweisen, die die Verteilung der Bearbeitungssuspension verbessern kann. Bei diesen Strukturen kann es sich zum Beispiel um Schlitze oder Nuten oder dergleichen handeln, die bereits während der Formgebung der Feinbearbeitungsmembran in die Membran eingearbeitet werden können, zum Beispiel bei einem Tiefziehprozess. Es ist aber auch möglich, die Strukturen nachträglich einzubringen. Die Strukturen können zum Beispiel spiralförmig sein, wobei die Spirale beispielsweise im Zentrum der Membran, also an ihrem Pol beginnen kann und der Spiralarm mit zunehmendem Radius um diesen Pol herum verläuft. Es können auch mehrere Spiralen vorgesehen sein. Alternative Strukturen, wie zum Beispiel meridional oder andersartig verlaufende Schlitze oder Nuten sind ebenfalls denkbar. Auch können Strukturen unterschiedlicher Geometrien gleichzeitig in die Feinbearbeitungsmembran eingearbeitet sein.

Des Weiteren ist es denkbar, in die Feinbearbeitungsmembran eine definierte Permeabilität oder Porosität für das Suspensionsmittel einzuarbeiten. Das Suspensionsmedium könnte dabei gleichzeitig das Druckmedium sein, und die Prozesszone wird zumindest auch von innen heraus mit Suspension versorgt.

In einer weiteren vorteilhaften Ausbildungsform kann ein Zentrierring vorgesehen werden, mit dem die Feinbearbeitungsmembran verbunden wird. Der Zentrierring kann zur besseren Positionierung der Feinbearbeitungsmembran gegenüber dem Werkzeuggrundkörper dienen. Der Zentrierring kann während des Formgebungsprozesses der Feinbearbeitungsmembran an der Feinbearbeitungsmembran fixiert werden. Der Ring kann aus Kunststoff oder Metall, zum Beispiel Aluminium, Stahl oder Messing, bestehen. Das Material muss geeignet sein, die Formgebungstemperaturen während des Herstellungsprozesses der Feinbearbeitungsmembran, zum Beispiel 200°C, zu vertragen. Der Zentrierring kann beispielsweise L-förmig sein mit einem Zylinderstück und einem Radialstück. Eine Innenfläche des Zylinderstückes kann zur Zentrierung dienen, während eine untere Fläche des radial sich erstreckenden Radialstücks als Dichtfläche dienen kann. Die äußere Fläche des Zylinderstückes und/oder die obere Fläche des Radialstückes können zur Fixierung der Feinbearbeitungsmembran dienen. Die Dichtfläche kann gleichzeitig zur axialen Positionierung der Feinbearbeitungsmembran dienen.

Gemäß einem zweiten Aspekt der vorliegenden Erfindung wird ein Feinbearbeitungswerkzeug mit einem druckbeaufschlagbaren Werkzeugkopf bereitgestellt, der ein lösbares Befestigungsmittel zum Befestigen einer zuvor beschriebenen austauschbaren Feinbearbeitungsmembran aufweist. Unter einem "lösbaren Befestigungsmittel" wird hierin jegliches Befestigungsmittel verstanden, dass dazu ausgestaltet ist, eine austauschbare Feinbearbeitungsmembran zum Feinbearbeiten am Werkzeugkopf zu befestigen und für einen Austausch zu lösen.

Der Werkzeugkopf des Feinbearbeitungswerkzeugs ist daher der austauschbaren Feinbearbeitungsmembran angepasst. Für eine Feinbearbeitungsmembran mit anderem Durchmesser kann es von Vorteil sein, wenn der Werkzeugkopf selbst austauschbar am Feinbearbeitungswerkzeug befestigt ist, sodass ein entsprechend passender Werkzeugkopf für die Feinbearbeitungsmembran mit anderem Durchmesser leicht eingesetzt werden kann.

Vorzugsweise begrenzt der Werkzeugkopf werkzeugseitig einen Druckraum, der bei befestigter Feinbearbeitungsmembran werkstückseitig von der Feinbearbeitungsmembran begrenzt wird. Der Druckraum ist dabei vorteilhafterweise werkzeugseitig über eine Druckleitung druckbeaufschlagbar. Das Befestigungsmittel ist dabei vorzugsweise dazu ausgestaltet, die Feinbearbeitungsmembran umfangseitig umlaufend druckdicht und rutschfest am Werkzeugkopf zu befestigen. Vorzugsweise ist dieses Befestigungsmittel eine manuell auf den Werkzeugkopf auf- und abschraubbare Überwurfmutter, die mit einem ringförmigen Innenflansch einen ringförmig umlaufenden Befestigungsfalz der Feinbearbeitungsmembran, welcher zudem die Funktion eines Dichtungsrings hat, dichtend auf eine ringförmige Dichtungskante am Werkzeugkopf drückt.

Gemäß einem dritten Aspekt der vorliegenden Erfindung wird ein Verfahren zur Herstellung einer zuvor beschriebenen auswechselbaren Feinbearbeitungsmembran bereitgestellt mit den folgenden Schritten:
- Benetzen einer Gewebelage mit einem fließfähigen Elastomer,
- Aufbringen eines Feinbearbeitungsmittelträgers auf das die Gewebelage benetzende fließfähige Elastomer,
- Vernetzen des die Gewebelage benetzenden fließfähigen Elastomers, sodass das Elastomer verfestigt wird und dabei die Gewebelage sowie der Feinbearbeitungsmittelträger in dem Elastomer eingebettet werden.

Vorzugsweise liegt die Gewebelage zunächst als eine Gewebebahn vor, die über eine Walzenfördereinheit in Längsrichtung transportiert wird, wobei die Gewebebahn während des Transports mit dem fließfähigen Elastomer benetzt wird und der Feinbearbeitungsmittelträger in Form einer Bahn auf das fließfähige Elastomer auflaminiert wird, um eine Membranbahn zu erhalten. Dies erlaubt eine schnelle, kostengünstige, homogene serielle Herstellung von Feinbearbeitungsmembranen. Es ist von Vorteil, vor dem Auflaminieren des Feinbearbeitungsmittelträgers das fließfähige Elastomer dabei mittels eines Abstreifers, einer Walze und/oder eines Rakels flächig homogen und in kontrollierter Dicke auf der Gewebebahn zu verteilen, um eine definierte und homogene Dicke der Membranbahn zu erhalten. Nach dem Auflaminieren des Feinbearbeitungsmittelträgers wird das die Gewebebahn benetzende fließfähige Elastomer vorzugsweise mittels Druck- und Temperaturwalzen vorzugsweise bei 150°C bis 200°C vernetzt. Vorzugsweise wird anschließend die Feinbearbeitungsmembran aus der Membranbahn formgeprägt und ausgetrennt, beispielsweise ausgeschnitten oder ausgestanzt. Das Formprägen wird dabei vorzugsweise mit einem Prägestempel und vorzugsweise bei einer Temperatur von 150°C bis 200°C durchgeführt. Durch das Formprägen der als einstückige Kompositware vorliegenden Feinbearbeitungsmembran können sehr starke Wölbungen der Feinbearbeitungsmembran realisiert werden, ohne dass dabei befürchtet werden muss, dass der Feinbearbeitungsmittelträger Falten wirft bzw. beim Feinbearbeiten auf- oder abreißt.

Beim Formprägevorgang kann es zu einer Vervollständigung der Vernetzung kommen. Es hat sich gezeigt, dass der erste Vernetzungsschritt nicht zwangsläufig zu einer vollständigen Vernetzung führt, sondern zu einem Vernetzungsgrad von z.B. 80 %. Die vollständige Vernetzung kann dann z.B. bei den angegebenen Temperaturen während der Formprägung erreicht werden. Die vollständige Vernetzung ist vorteilhaft für die Formhaltigkeit der Feinbearbeitungsmembran.

Je nach gewünschter Dicke und/oder Steifigkeit der Feinbearbeitungsmembran können zwei oder mehr Gewebelagen mit fließfähigem Elastomer benetzt werden. Dabei können die Gewebelagen zusammen benetzt werden, oder sie werden jeweils einzeln oder in Gruppen benetzt und anschließend die entsprechenden Elastomerschichten miteinander vernetzt. Auch in dieser Ausführungsform des Herstellungsverfahrens wird die Feinbearbeitungsmembran allerdings als eine einstückige Kompositware hergestellt.

Mit der erfindungsgemäßen Feinbearbeitungsmembran kann ein Verfahren zum Feinbearbeiten mindestens eines Werkstücks mit den folgenden Schritten durchgeführt werden:
- Befestigen einer ersten auswechselbaren Feinbearbeitungsmembran an einem Werkzeugkopf eines Feinbearbeitungswerkzeugs, sodass die Feinbearbeitungsmembran in befestigtem Zustand werkstückseitig einen druckbeaufschlagbaren Druckraum des Werkzeugkopfs druckdicht abschließt,
- Beaufschlagen des Druckraums mit Druck,
- Feinbearbeiten des mindestens einen Werkstücks in einem ersten Feinbearbeitungsschritt,
- Auswechseln der ersten auswechselbaren Feinbearbeitungsmembran durch eine zweite auswechselbare Feinbearbeitungsmembran,
- Beaufschlagen des Druckraums mit Druck, und
- Feinbearbeiten des mindestens einen Werkstücks in einem zweiten Feinbearbeitungsschritt.

Im Gegensatz zu bekannten Feinbearbeitungsverfahren, bei denen die Feinbearbeitungsmembran zwischen zwei Feinbearbeitungsschritten nicht ausgewechselt wird, sondern fest mit dem Feinbearbeitungswerkzeug verbunden ist, wird beispielsweise bei abgenutztem Feinbearbeitungsmittelträger die auswechselbare Feinbearbeitungsmembran selbst ausgetauscht. Dies ist erheblich schneller, kostengünstiger und erlaubt eine größere Bandbreite von einsetzbaren Konturen von Feinbearbeitungsmembranen, insbesondere von Feinbearbeitungsmembranen mit starker Wölbung. Die Feinbearbeitungsmembran kann auch zusammen mit dem Werkzeugkopf manuell oder automatisiert ausgetauscht werden, sodass verschiedene Größen und/oder Formen von Feinbearbeitungsmembranen eingesetzt werden können.

Vorzugsweise wird während des ersten und/oder zweiten Feinbearbeitungsschritts der Innendruck in dem Druckraum mittels einer Druckregelung konstant gehalten und die Größe der mit einem zu bearbeitenden Werkstück in Kontakt stehenden Fläche mittels einer Regelung des Abstands zwischen Werkstückoberfläche und Werkzeugkopf und/oder der Anpresskraft der Feinbearbeitungsmembran auf die Werkstückoberfläche geregelt. Damit kann die Größe der feinbearbeiteten Fläche der Werkstückoberfläche entsprechend dynamisch angepasst werden, ohne den Anpressdruck auf das Werkstück und damit die Abtragungsstärke zu verändern.

Im Folgenden wird die Erfindung anhand der beiliegenden Figuren näher erläutert, die eine bevorzugte Ausführungsform der Erfindung zeigen. In den Figuren ist im Einzelnen zu erkennen:
- Fig. 1a:: Eine perspektivische Ansicht auf eine bevorzugte Ausführungsform eines Werkzeugkopfs eines Feinbearbeitungswerkzeugs mit einer bevorzugten Ausführungsform einer befestigten auswechselbaren Feinbearbeitungsmembran;
- Fig. 1b:: Eine perspektivische Ansicht mit ausgeschnittenem Sektor auf eine bevorzugte Ausführungsform eines Werkzeugkopfs eines Feinbearbeitungswerkzeugs mit einer bevorzugten Ausführungsform einer befestigten auswechselbaren Feinbearbeitungsmembran;
- Fig. 2:: Eine schematische Darstellung der Bestandteile einer Membranbahn für die Herstellung einer Feinbearbeitungsmembran;
- Fig. 3:: Eine schematische Darstellung einer bevorzugten Ausführungsform des erfindungsgemäßen Herstellungsverfahrens einer Feinbearbeitungsmembran.

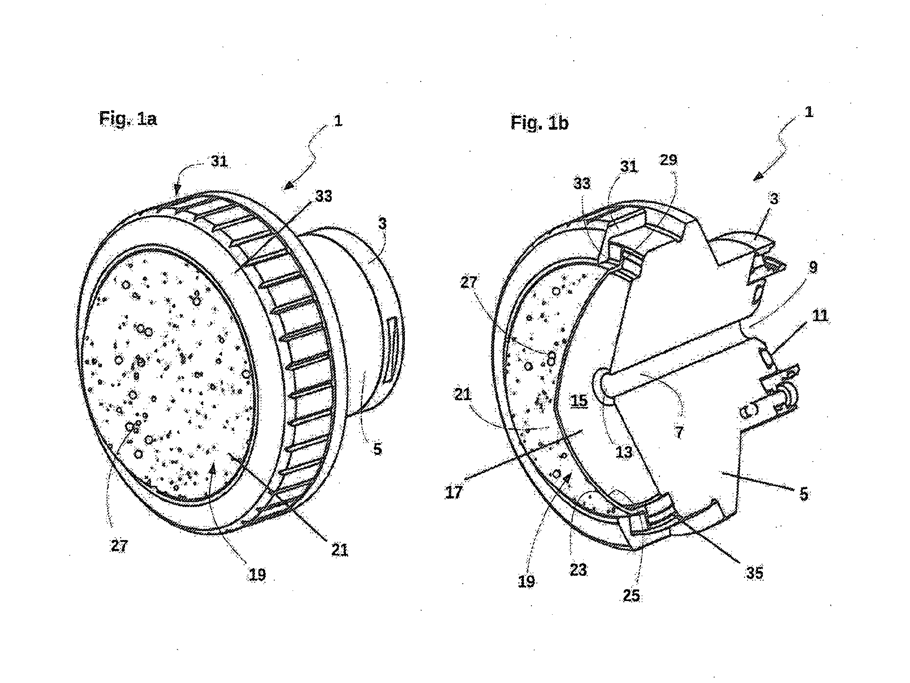

Figuren 1 a und 1 b zeigen einen Werkzeugkopf 1 eines Feinbearbeitungswerkzeugs (nicht gezeigt), wobei der Werkzeugkopf 1 werkzeugseitig eine lösbare Befestigungseinrichtung 3 für die Befestigung des Werkzeugkopfs 1 an einem stationären Feinbearbeitungswerkzeug wie etwa einer Polierspindel oder einer anderen Poliermaschine aufweist. Der Werkzeugkopf 1 weist zudem einen im Wesentlichen rotationssymmetrischen Grundkörper 5 auf, der entlang seiner Längsachse eine durchgehende Druckleitung 7 aufweist. Das werkzeugseitige Ende 9 der Druckleitung 7 ist von einer O-Ring-Dichtung 11 umgeben, damit die Druckleitung 7 luftdicht mit einer Druckquelle eines Feinbearbeitungswerkzeugs verbunden werden kann. Das andere werkstückseitige Ende 13 der Druckleitung 7 mündet an einer werkstückseitigen Stirnfläche 15 des Grundkörpers 5 in einen Druckraum 17, der werkzeugseitig von der Stirnfläche 15 des Grundkörpers 5 begrenzt wird.

Werkstückseitig wird der Druckraum 17 durch eine an dem Werkzeugkopf 1 befestigte Feinbearbeitungsmembran 19 begrenzt. Die Feinbearbeitungsmembran 19 weist einen zentralen schalenförmigen Feinbearbeitungsabschnitt 21 auf, dessen Durchmesser im Wesentlichen dem Durchmesser der Stirnfläche 15 des Grundkörpers 5 des Werkzeugkopfs 1 entspricht. Die werkstückseitige Oberfläche 23 des Feinbearbeitungsabschnitts 21 ist konvex und die werkzeugseitige Oberfläche 25 des Feinbearbeitungsabschnitts 21 ist konkav geformt. An der konvexen Oberfläche 23 des Feinbearbeitungsabschnitts 21 ist ein Feinbearbeitungsmittelträger 27 in der Feinbearbeitungsmembran 19 integriert.

Umfangseitig weist die Feinbearbeitungsmembran 19 einen ringförmig umlaufenden L-förmigen Befestigungsfalz 29 auf, welcher zudem die Funktion eines Dichtungsrings hat. Der Befestigungsfalz 29 ist mittels einer auf dem Grundkörper 5 aufgeschraubten oder aufgespannten Überwurfmutter 31 umfangseitig umlaufend druckdicht und rutschfest am Werkzeugkopf 1 befestigt. Die Überwurfmutter 31 weist dazu einen Innenflansch 33 auf, der den Befestigungsfalz 29 dichtend auf eine ringförmig am Grundkörper 5 verlaufende Dichtungskante 35 drückt.

Damit ist der Druckraum 17 druckdicht abgeschlossen und kann von einem Feinbearbeitungswerkzeug über die Druckleitung 7 mit einem Fluid wie etwa Luft, Wasser oder Öl mit geregeltem Druck beaufschlagt werden. Damit wird über die Fläche des Feinbearbeitungsabschnitts 21 der Feinbearbeitungsmembran 19 ein homogenes, konstantes Druckprofil erreicht.

Durch seitliches Bewegen, Oszillieren und/oder Rotieren des Werkzeugkopfs 1 mittels eines Feinbearbeitungswerkzeugs relativ zu einer Oberfläche eines Werkstücks (nicht gezeigt) bzw. Bewegen, Oszillieren und/oder Rotieren eines Werkstücks relativ zum Werkzeugkopf 1 kann bei definiertem Anpressdruck zwischen der Feinbearbeitungsmembran 19 und einem Werkstück, wobei der Anpressdruck dem geregelten Innendruck im Druckraum 17 entspricht, mit präzise reproduzierbarer Genauigkeit die Werkstückoberfläche feinbearbeitet werden. Dabei kann der Werkzeugkopf 1 orthogonal oder winklig angestellt zur Werkstückoberfläche ausgerichtet sein.

Während des Feinbearbeitens kann über den Abstand des Werkzeugkopfs 1 zur Werkstückoberfläche und/oder über die Anpresskraft der Feinbearbeitungsmembran 19 auf die Werkstückoberfläche die Größe der feinbearbeiteten Fläche geregelt werden, wenn der Innendruck im Druckraum 17 über eine Druckregelung konstant gehalten wird. Damit kann die Größe der feinbearbeiteten Fläche der Werkstückoberfläche entsprechend dynamisch angepasst werden, ohne den Anpressdruck auf das Werkstück und damit die Abtragungsstärke zu verändern.

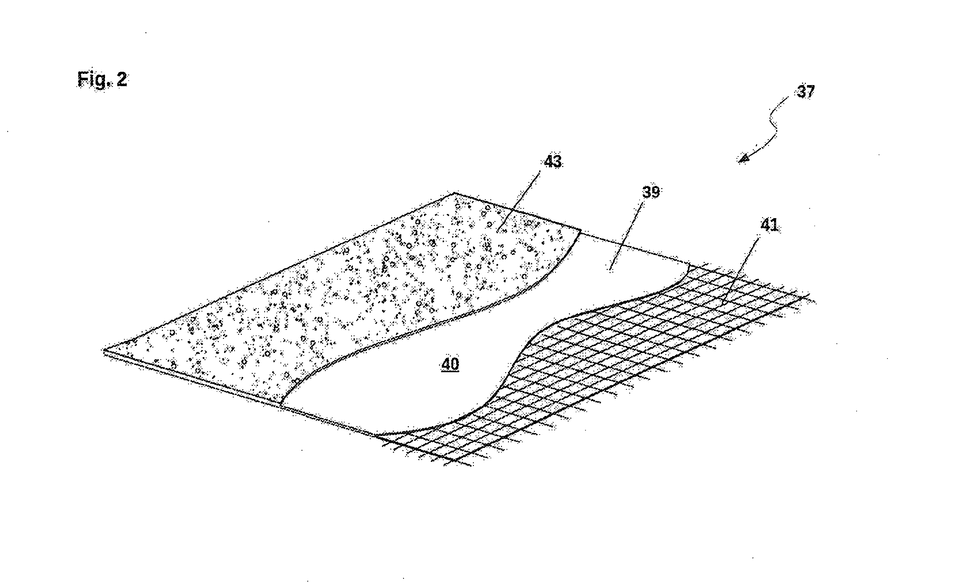

Fig. 2 zeigt schematisch den Aufbau einer Membranbahn 37, aus der in späteren Schritten einer bevorzugten Ausführungsform des Herstellungsverfahrens der Feinbearbeitungsmembran 19 formgeprägt und ausgetrennt wird. Die Membranbahn 37 weist eine unterseitig in einer Elastomerschicht 39 eingebetteten Gewebebahn 41 auf. Oberseitig ist eine Bahn 43 eines Feinbearbeitungsmittelträgers 27 in die Schicht 39 eines Elastomers 40 eingebettet. Die Unterseite entspricht später der Werkzeugseite, die den Druckraum 17 begrenzt. Die Oberseite entspricht der Werkstückseite, auf der ein Feinbearbeitungsmittel aufgebracht wird und die beim Feinbearbeiten mit einem Werkstück in Reibkontakt gebracht wird.

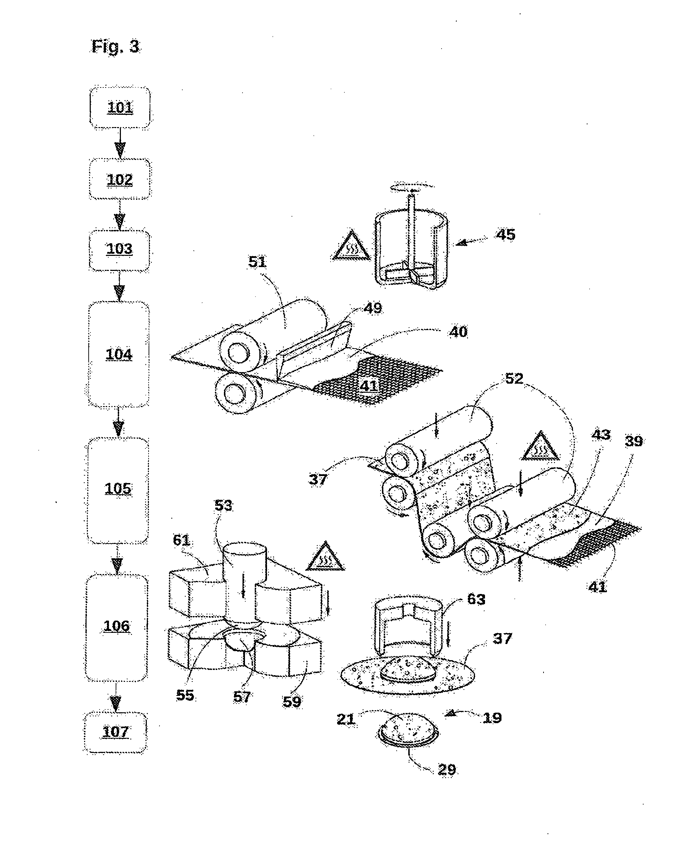

Fig. 3 zeigt schematisch einer bevorzugte Ausführungsform des Herstellungsverfahrens der Feinbearbeitungsmembran 19. Zunächst wird in einem ersten Schritt 101 ein Kautschuk wie etwa Epichlorhydrin-Kautschuk (ECO), Ethylen-Propylen-Dien-Kautschuk (EPDM), Nitrilkautschuk (NBR), Butylkautschuk (IIR), Fluorkautschuk (FPM), Polyester/Ether-Polyurethan-Kautschuk (PUR) und/oder Ethylenvinylacetat-Kautschuk (EVA) als Rohmaterial bereitgestellt. Anschließend wird in Schritt 102 das Rohmaterial granuliert auf eine Partikelgröße von einigen Millimetern. In einem Anmischschritt 103 wird das Granulat mit einem Vernetzer und einem Lösemittel versetzt und bei einer Prozesstemperatur von ca. 50°C in einem Mischer 45 vermischt. Dabei wird ein fließfähiges Elastomer 40 erhalten, das in einem Rakelschritt 104 mit einem Rakel 49 gleichmäßig und mit definierter Dicke auf eine Gewebebahn 41 aufgebracht wird, die somit mit dem fließfähigen Elastomer 40 benetzt wird. Dabei wird mittels einer Walzenfördereinheit 51 die Gewebebahn 41 entlang ihrer Längsachse transportiert.

In einem folgenden Vernetzungs- und Laminierschritt 105 wird das die Gewebebahn 41 benetzende fließfähige Elastomer 40 mit einer Bahn 43 eines Feinbearbeitungsmittelträgers 27 laminiert. Dabei wird kein Verbindungsmittel eingesetzt, sondern nur die Bahn 43 eines Feinbearbeitungsmittelträgers 27 auf das noch fließfähige Elastomer 40 aufgebracht. Über ein System 52 von Druck- und Temperaturwalzen, welches die Membranbahn 37 mit einem Druck von 100 bis 200 bar zusammenpresst und eine Prozesstemperatur von 150°C bis 200°C aufweist, wird das fließfähige Elastomer 40 verfestigt, womit die Gewebebahn 41 sowie die Bahn 43 des Feinbearbeitungsmittelträgers 27 in dem Elastomer 40 eingebettet werden.

Anschließend wird in einem Präge- und Austrennschritt 106 die so als einstückige Kompositware in Form von Meterware erhaltene Membranbahn 37 mittels eines Prägestempels 53 mit konvexer Prägefläche 55 in eine im Wesentlichen konkave Prägefläche 57 eines unterliegenden Formkörpers 59 gepresst. Dabei hält ein Niederhalter 61 die Membranbahn 37 umfangseitig um den Prägestempel 53 herum rutschfest auf dem unterliegenden Formkörper 59. Während des Formprägens wirkt eine Prozesstemperatur von 150°C bis 200°C auf die Membranbahn 37 ein, damit diese sich der konvexen Prägefläche 55 des Prägestempels 53 bzw. der konkaven Prägefläche 57 des unterliegenden Formkörpers 59 anpassen kann und eine entsprechende Form einnimmt. Anschließend wird mittels eines Stanzrings 63 die Feinbearbeitungsmembran 19 aus der formgeprägten Membranbahn 37 ausgestanzt. Bei dem Präge- und Austrennschritt 106 ergibt sich umfangseitig ein L-förmiger Befestigungsfalz 29 mit einem zylinderförmigen Abschnitt und einem ringförmigen Abschnitt.

In einem letzten Kontrollschritt 107 wird die Gesamthöhe, die Sickenhöhe und der Durchmesser des Feinbearbeitungsabschnitts 21 gemessen und geprüft, ob die Werte innerhalb von Tolerenzgrenzen liegen. Die Sickenhöhe bezeichnet hierbei die Länge des zylinderförmigen Abschnitts des Befestigungsfalzes 29.

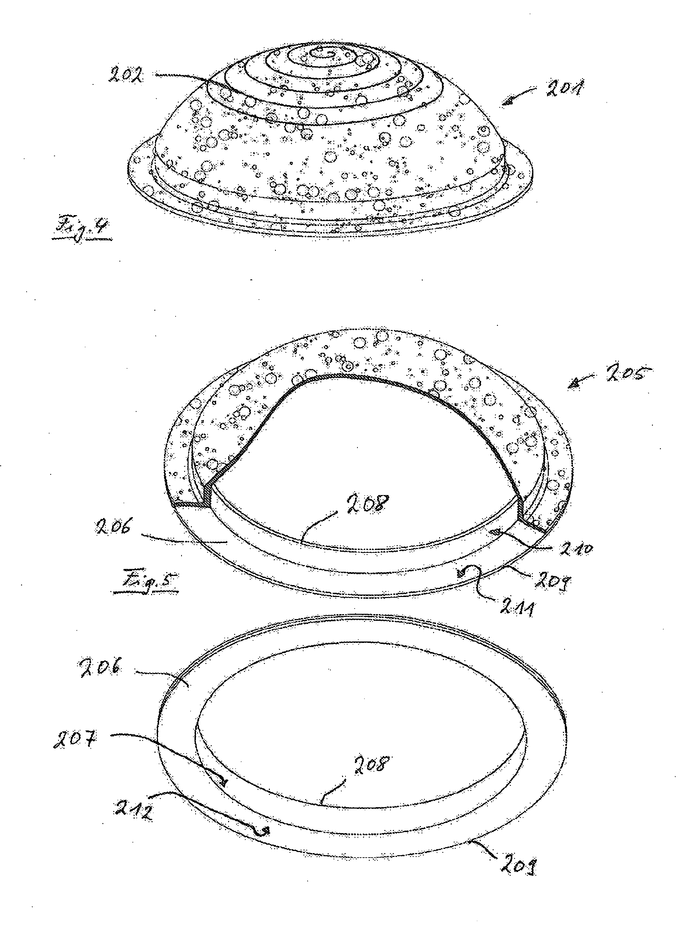

Figur 4 zeigt eine fertig ausgeformte Feinbearbeitungsmembran 201, deren Oberfläche auf der dem hier nicht dargestellten Werkstück zugewandten Seite eine spiralförmige Struktur 202 aufweist. Bei dieser Struktur 202 handelt es sich um eine schmale Nut in der Membranoberfläche, die die Verteilung einer Bearbeitungssuspension während des Bearbeitungsprozesses positiv beeinflussen kann. Die Struktur 202 kann während des Formens der Feinbearbeitungsmembran 201, zum Beispiel während eines Tiefziehprozesses, eingebracht werden. Die Struktur kann bereits in der Prägefläche 57 des Formkörpers 59 vorgesehen sein (siehe Fig. 3). Nachträgliche Einbringungen der Struktur 202, zum Beispiel durch Stempel oder Matrize, sind ebenfalls denkbar. Es können auch alternative Strukturformen sowie Kombinationen mehrerer Strukturen, zum Beispiel meridional verlaufende Schlitze oder Nuten vorgesehen werden.

Figur 5 zeigt eine weitere Feinbearbeitungsmembran 205 zusammen mit einem Zentrierring 206, der in Fig. 6 perspektivisch von unten dargestellt ist. Der Zentrierring 206 wird zur besseren Positionierung der Feinbearbeitungsmembran 205 gegenüber dem Werkzeuggrundkörper 5 (siehe Figuren 1 a und 1 b) vorgesehen. Der Zentrierring 206 kann während des Formgebungsprozesses der Feinbearbeitungsmembran 205 in die Feinbearbeitungsmembran 205 eingebracht werden. Hierzu kann der Zentrierring 206 in den Formkörper 59 (siehe Fig. 3)eingelegt werden. Der Zentrierring 206 ist im Wesentlichen L-förmig mit einer zur Zentrierung dienenden Mantelfläche 207 auf der Innenseite eines Zylinderstücks 208 und einem rechtwinklig davon sich nach außen erstreckenden Radialstück 209. Kontaktflächen 210 und 211 des Zylinderstücks 208 bzw. des Radialstücks 209 können in geeigneter Weise strukturiert sein, um die Haftung zwischen dem Zentrierring 206 und der Feinbearbeitungsmembran 205 zu erhöhen.

Figur 6 zeigt den Zentrierring 206 mit Blick auf eine Dichtfläche 212 des Radialstückes 209, die gleichzeitig zur axialen Positionierung der Feinbearbeitungsmembran 206 dient.

Die vorliegende Erfindung erlaubt es, auch mit stark gewölbten Membranen (19) Werkstückoberflächen präzise reproduzierbar feinbearbeiten zu können. Außerdem wird ein Ab- oder Aufreißen des Feinbearbeitungsmittelträgers (27) vermieden und das Feinbearbeiten vereinfacht und beschleunigt.

## Patentansprüche

1. Auswechselbare Feinbearbeitungsmembran (19) zum Befestigen an einem druckbeaufschlagbaren Werkzeugkopf (1) eines stationären Feinbearbeitungswerkzeugs für das Feinbearbeiten einer Werkstückoberfläche, wobei die Feinbearbeitungsmembran für ein Fluid druckdicht ist, **dadurch gekennzeichnet, dass** ein Feinbearbeitungsmittelträger (27) in der Feinbearbeitungsmembran (19) integriert ist, wobei die Feinbearbeitungsmembran (19) ein vernetztes Elastomer (40) aufweist und der Feinbearbeitungsmittelträger (27) in dem vernetzten Elastomer (40) eingebettet ist.

2. Auswechselbare Feinbearbeitungsmembran nach Anspruch 1, **gekennzeichnet durch** eine in dem vernetzten Elastomer eingebettete Gewebelage.

3. Auswechselbare Feinbearbeitungsmembran (19) nach Anspruch 2, wobei die Gewebelage werkzeugseitig in dem vernetzten Elastomer (40) eingebettet ist und der Feinbearbeitungsmittelträger (27) werkstückseitig in dem vernetzten Elastomer (40) eingebettet ist.

4. Auswechselbare Feinbearbeitungsmembran (19) nach einem der vorhergehenden Ansprüche, mit einem zentralen Feinbearbeitungsabschnitt (21), wobei die werkstückseitige Oberfläche (23) des Feinbearbeitungsabschnitts (21) konvex und die werkzeugseitige Oberfläche (25) des Feinbearbeitungsabschnitts (21) konkav geformt ist.

5. Auswechselbare Feinbearbeitungsmembran (19) nach einem der vorhergehenden Ansprüche, wobei die Feinbearbeitungsmembran (19) einen ringförmig umlaufenden Befestigungsfalz (29) aufweist, welcher zudem die Funktion eines Dichtungsrings hat.

6. Auswechselbare Feinbearbeitungsmembran (19) nach einem der vorhergehenden Ansprüche, wobei das Elastomer (40) mindestens einen Kautschuk aus der Gruppe aufweist, die besteht aus: Epichlorhydrin-Kautschuk (ECO), Ethylen-Propylen-Dien-Kautschuk (EPDM), Nitrilkautschuk (NBR), Butylkautschuk (IIR), Fluorkautschuk (FPM), Polyester/Ether-Polyurethan-Kautschuk (PUR), Ethylenvinylacetat-Kautschuk (EVA).

7. Auswechselbare Feinbearbeitungsmembran (19) nach einem der vorhergehenden Ansprüche, wobei die Gewebelage mindestens einen Stoff aus der Gruppe aufweist, die besteht aus: Polyethersulfon (PES), Polyamid (PA).

8. Auswechselbare Feinbearbeitungsmembran (19) nach einem der vorhergehenden Ansprüche, wobei die Feinbearbeitungsmembran (19) zwei oder mehr Gewebelagen und/oder Elastomerschichten aufweist.

9. Stationäres Feinbearbeitungswerkzeug mit einem druckbeaufschlagbaren Werkzeugkopf (1), der ein lösbares Befestigungsmittel (31) zum Befestigen einer auswechselbaren Feinbearbeitungsmembran (19) nach einem der vorhergehenden Ansprüche aufweist.

10. Stationäres Feinbearbeitungswerkzeug nach Anspruch 9, wobei der Werkzeugkopf (1) werkzeugseitig einen Druckraum (17) begrenzt, der bei befestigter Feinbearbeitungsmembran (19) werkstückseitig von der Feinbearbeitungsmembran (19) begrenzt wird.

11. Stationäres Feinbearbeitungswerkzeug nach Anspruch 10, wobei der Druckraum (19) werkzeugseitig über eine Druckleitung (7) druckbeaufschlagbar ist.

12. Stationäres Feinbearbeitungswerkzeug nach einem der Ansprüche 9 bis 11, wobei das Befestigungsmittel (31) dazu ausgestaltet ist, die Feinbearbeitungsmembran (19) umfangseitig umlaufend druckdicht und rutschfest am Werkzeugkopf (1) zu befestigen.

13. Verfahren zur Herstellung einer auswechselbaren Feinbearbeitungsmembran nach einem der Ansprüche 1 bis 8 mit den folgenden Schritten:
- Benetzen (104) einer Gewebelage mit einem fließfähigen Elastomer (40),
- Aufbringen (105) eines Feinbearbeitungsmittelträgers (27) auf das die Gewebelage benetzende fließfähige Elastomer (40),
- Vernetzen (105) des die Gewebelage benetzenden fließfähigen Elastomers (40), sodass das Elastomer (40) verfestigt wird und dabei die Gewebelage sowie der Feinbearbeitungsmittelträger (27) in dem Elastomer (40) eingebettet werden.

14. Verfahren nach Anspruch 13, wobei die Gewebelage zunächst als eine Gewebebahn (41) vorliegt, die über eine Walzenfördereinheit (51) in Längsrichtung transportiert wird, wobei die Gewebebahn (41) während des Transports mit dem fließfähigen Elastomer (40) benetzt wird und der Feinbearbeitungsmittelträger (27) in Form einer Bahn (43) auf das fließfähige Elastomer (40) auflaminiert (105) wird, um eine Membranbahn (37) zu erhalten.

15. Verfahren nach Anspruch 14, wobei das fließfähige Elastomer (40) vor dem Auflaminieren (105) des Feinbearbeitungsmittelträgers (27) mittels eines Abstreifers, einer Walze und/oder eines Rakels (49) flächig homogen und in kontrollierter Dicke auf der Gewebebahn (41) verteilt wird.

16. Verfahren nach Anspruch 14 oder 15, wobei das die Gewebebahn (41) benetzende fließfähige Elastomer (40) nach dem Auflaminieren (105) des Feinbearbeitungsmittelträgers mittels eines Systems (52) von Druck- und Temperaturwalzen vernetzt wird.

17. Verfahren nach einem der Ansprüche 14 bis 16, wobei die Feinbearbeitungsmembran (19) aus der Membranbahn (37) formgeprägt und ausgetrennt (106) wird.

18. Verfahren nach Anspruch 17, wobei das Formprägen (106) mit einem Prägestempel (53) bei einer Temperatur von 150 °C bis 200 °C durchgeführt wird.

19. Verfahren nach einem der Ansprüche 13 bis 18, wobei das fließfähige Elastomer (40) bei einer Temperatur von 150 °C bis 200 °C vernetzt wird.

20. Verfahren nach einem der Ansprüche 13 bis 19, wobei je nach gewünschter Dicke und/oder Steifigkeit der Feinbearbeitungsmembran (19) zwei oder mehr Gewebelagen (41) mit fließfähigem Elastomer (40) benetzt werden.

## Claims

1. Exchangeable fine machining membrane (19) for fastening to a pressure-loadable tool head (1) of a stationary fine machining tool for the fine machining of a workpiece surface, the fine machining membrane being pressure-tight to a fluid, **characterized in that** a fine machining means carrier (27) is integrated in the fine machining membrane (19), the fine machining membrane (19) having a cross-linked elastomer (40), and the fine machining means carrier (27) being embedded in the cross-linked elastomer (40).

2. Exchangeable fine machining membrane according to Claim 1, **characterized by** a fabric ply embedded in the cross-linked elastomer.

3. Exchangeable fine machining membrane (19) according to Claim 2, the fabric ply being embedded in the cross-linked elastomer (40) on the tool side, and the fine machining means carrier (27) being embedded in the cross-linked elastomer (40) on the workpiece side.

4. Exchangeable fine machining membrane (19) according to one of the preceding claims, with a central fine machining portion (21), the workpiece-side surface (23) of the fine machining portion (21) being shaped convexly and the tool-side surface (25) of the fine machining portion (21) being shaped concavely.

5. Exchangeable fine machining membrane (19) according to one of the preceding claims, the fine machining membrane (19) having a fastening rabbet (29) which runs around in the form of a ring and which also has the function of a sealing ring.

6. Exchangeable fine machining membrane (19) according to one of the preceding claims, the elastomer (40) having at least one rubber from the group which consists of: epichlorohydrin rubber (ECO), ethylene-propylene-dien rubber (EPDM), nitrile rubber (NBR), butyl rubber (IIR), fluororubber (FPM), polyester/etherpolyurethane rubber (PUR), ethylenevinylacetate rubber (EVA).

7. Exchangeable fine machining membrane (19) according to one of the preceding claims, the fabric ply having at least one material from the group which consists of: polyethersulphone (PES), polyamide (PA).

8. Exchangeable fine machining membrane (19) according to one of the preceding claims, the fine machining membrane (19) having two or more fabric plies and/or elastomer layers.

9. Stationary fine machining tool with a pressure-loadable tool head (1) which has a releasable fastening means (31) for fastening an exchangeable fine machining membrane (19) according to one of the preceding claims.

10. Stationary fine machining tool according to Claim 9, the tool head (1) delimiting on the tool side a pressure space (17) which, with the fine machining membrane (19) fastened, is delimited on the workpiece side by the fine machining membrane (19).

11. Stationary fine machining tool according to Claim 10, the pressure space (19) being pressure-loadable on the tool side via a pressure line (7).

12. Stationary fine machining tool according to one of Claims 9 to 11, the fastening means (31) being configured for fastening the fine machining membrane (19) to the tool head (1) in a circumferentially continuous pressure-tight and non-slip manner.

13. Method for producing an exchangeable fine machining membrane according to one of Claims 1 to 8, having the following steps:
- wetting (104) of a fabric ply with a flowable elastomer (40),
- application (105) of a fine machining means carrier (27) to the flowable elastomer (40) wetting the fabric ply,
- cross-linking (105) of the flowable elastomer (40) wetting the fabric ply, so that the elastomer (40) is consolidated and at the same time the fabric ply and the fine machining means carrier (27) are embedded in the elastomer (40).

14. Method according to Claim 13, the fabric ply first being present as a fabric web (41) which is transported in the longitudinal direction via a roller-type conveying unit (51), the fabric web (41) being wetted during transport with the flowable elastomer (40), and the fine machining means carrier (27) being laminated (105) in the form of a web (43) onto the flowable elastomer (40) in order to obtain a membrane web (37).

15. Method according to Claim 14, the flowable elastomer (40), before the fine machining means carrier (27) is laminated on (105), being distributed on the fabric web (41) in a superficially homogeneous manner and in a controlled thickness by means of a wiper, a roller and/or a doctor blade (49).

16. Method according to Claim 14 or 15, the flowable elastomer (40) which wets the fabric web (41) being cross-linked by means of a system (52) of pressure and temperature rollers after the fine machining means carrier has been laminated on (105).

17. Method according to one of Claims 14 to 16, the fine machining membrane (19) being form-punched and separated (106) out of the membrane web (37).

18. Method according to Claim 17, form-punching (106) being carried out by means of a punching die (53) at a temperature of 150°C to 200°C.

19. Method according to one of Claims 13 to 18, the flowable elastomer (40) being cross-linked at a temperature of 150°C to 200°C.

20. Method according to one of Claims 13 to 19, two or more fabric plies (41) being wetted with flowable elastomer (40), depending on the desired thickness and/or rigidity of the fine machining membrane (19).

## Revendications

1. Membrane d'usinage de précision remplaçable (19) pour la fixation à une tête d'outil (1), pouvant être sollicitée par pression, d'un outil d'usinage de précision stationnaire pour l'usinage de précision de la surface d'une pièce, la membrane d'usinage de précision étant étanche à la pression pour un fluide, **caractérisée en ce qu'**un support de moyen d'usinage de précision (27) est intégré dans la membrane d'usinage de précision (19), la membrane d'usinage de précision (19) présentant un élastomère réticulé (40) et le support de moyen d'usinage de précision (27) étant noyé dans l'élastomère réticulé (40).

2. Membrane d'usinage de précision remplaçable selon la revendication 1, **caractérisée par** une couche de tissu noyée dans l'élastomère réticulé.

3. Membrane d'usinage de précision remplaçable (19) selon la revendication 2, dans laquelle la couche de tissu est noyée du côté de l'outil dans l'élastomère réticulé (40) et le support de moyen d'usinage de précision (27) est noyé du côté de la pièce dans l'élastomère réticulé (40).

4. Membrane d'usinage de précision remplaçable (19) selon l'une quelconque des revendications précédentes, comprenant une portion d'usinage de précision centrale (21), la surface (23) de la portion d'usinage de précision (21) du côté de la pièce étant formée sous forme convexe et la surface (25) de la portion d'usinage de précision (21) du côté de l'outil étant formée sous forme concave.

5. Membrane d'usinage de précision remplaçable (19) selon l'une quelconque des revendications précédentes, dans laquelle la membrane d'usinage de précision (19) présente un pli de fixation périphérique annulaire (29) qui présente en outre la fonction d'une bague d'étanchéité.

6. Membrane d'usinage de précision remplaçable (19) selon l'une quelconque des revendications précédentes, dans laquelle l'élastomère (40) présente au moins un caoutchouc du groupe constitué de : caoutchouc d'épichlorhydrine (ECO), caoutchouc éthylène-propylène-diène (EPDM), caoutchouc nitrile (NBR), caoutchouc butyle (IIR), caoutchouc fluoré (FPM), caoutchouc polyester/éther-polyuréthane (PUR), caoutchouc d'éthylène-acétate de vinyle (EVA).

7. Membrane d'usinage de précision remplaçable (19) selon l'une quelconque des revendications précédentes, dans laquelle la couche de tissu présente au moins une substance parmi le groupe constitué de : polyéthersulfone (PES), polyamide (PA) .

8. Membrane d'usinage de précision remplaçable (19) selon l'une quelconque des revendications précédentes, dans laquelle la membrane d'usinage de précision (19) présente deux ou plus de deux couches de tissu et/ou couches d'élastomère.

9. Outil d'usinage de précision stationnaire comprenant une tête d'outil (1) pouvant être sollicitée par pression, qui présente un moyen de fixation amovible (31) pour la fixation d'une membrane d'usinage de précision remplaçable (19) selon l'une quelconque des revendications précédentes.

10. Outil d'usinage de précision stationnaire selon la revendication 9, dans lequel la tête d'outil (1) délimite du côté de l'outil un espace de pression (17) qui, lorsque la membrane d'usinage de précision (19) est fixée, est limité du côté de la pièce par la membrane d'usinage de précision (19).

11. Outil d'usinage de précision stationnaire selon la revendication 10, dans lequel l'espace de pression (19) peut être sollicité par pression du côté de l'outil par une conduite de pression (7).

12. Outil d'usinage de précision stationnaire selon l'une quelconque des revendications 9 à 11, dans lequel le moyen de fixation (31) est configuré de manière à fixer la membrane d'usinage de précision (19) de manière étanche à la pression circonférentiellement du côté de la périphérie et de manière résistant au glissement, au niveau de la tête d'outil (1).

13. Procédé de fabrication d'une membrane d'usinage de précision remplaçable selon l'une quelconque des revendications 1 à 8, comprenant les étapes suivantes :
- mouillage (104) d'une couche de tissu avec un élastomère fluide (40),
- application (105) d'un support de moyen d'usinage de précision (27) sur l'élastomère fluide (40) mouillant la couche de tissu,
- réticulation (105) de l'élastomère fluide (40) mouillant la couche de tissu, de telle sorte que l'élastomère (40) soit solidifié et que la couche de tissu ainsi que le support de moyen d'usinage de précision (27) soient en l'occurrence noyés dans l'élastomère (40).

14. Procédé selon la revendication 13, dans lequel la couche de tissu se présente d'abord sous la forme d'une bande de tissu (41) qui est transportée par le biais d'une unité de transport à rouleaux (51) dans la direction longitudinale, la bande de tissu (41), pendant le transport, étant mouillée avec l'élastomère fluide (40) et le support de moyen d'usinage de précision (27) étant laminé (105) sous la forme d'une bande (43) sur l'élastomère fluide (40) afin d'obtenir une bande de membrane (37).

15. Procédé selon la revendication 14, dans lequel l'élastomère fluide (40) est réparti à plat de manière homogène et avec une épaisseur contrôlée sur la bande de tissu (41) avant le laminage (105) du support de moyen d'usinage de précision (27) au moyen d'un racloir, d'un rouleau et/ou d'une racle (49).

16. Procédé selon la revendication 14 ou 15, dans lequel l'élastomère fluide (40) mouillant la bande de tissu (41) est réticulé après le laminage (105) du support de moyen d'usinage de précision au moyen d'un système (52) de rouleaux de pression et de température.

17. Procédé selon l'une quelconque des revendications 14 à 16, dans lequel la membrane d'usinage de précision (19) est mise en forme par gaufrage à partir de la bande de membrane (37) et est séparée (106) de celle-ci.

18. Procédé selon la revendication 17, dans lequel le formage par gaufrage (106) est effectué avec un poinçon de gaufrage (53) à une température de 150°C à 200°C.

19. Procédé selon l'une quelconque des revendications 13 à 18, dans lequel l'élastomère fluide (40) est réticulé à une température de 150°C à 200°C.

20. Procédé selon l'une quelconque des revendications 13 à 19, dans lequel, en fonction de l'épaisseur et/ou de la rigidité souhaitée(s) de la membrane d'usinage de précision (19), deux ou plus de deux couches de tissu (41) sont mouillées avec l'élastomère fluide (40).
